(19) **Europäisches Patentamt**
**European Patent Office**
**Office européen des brevets**

(11) **EP 2 675 687 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(21) Anmeldenummer: **12704393.3**

(22) Anmeldetag: **08.02.2012**

(51) Int Cl.:
**B61C 5/02** *(2006.01)*    **F01P 7/00** *(2006.01)*

(86) Internationale Anmeldenummer:
**PCT/EP2012/052085**

(87) Internationale Veröffentlichungsnummer:
**WO 2012/110370 (23.08.2012 Gazette 2012/34)**

(54) **VERFAHREN ZUM BETREIBEN EINES SCHIENENFAHRZEUGS**

METHOD FOR OPERATING A RAIL VEHICLE

PROCÉDÉ DE FONCTIONNEMENT D'UN VÉHICULE SUR RAILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2011 DE 102011004327**

(43) Veröffentlichungstag der Anmeldung:
**25.12.2013 Patentblatt 2013/52**

(73) Patentinhaber: **Siemens Aktiengesellschaft 80333 München (DE)**

(72) Erfinder: **HINTERMEIR, Stefan 83229 Aschau I. Ch (DE)**

(56) Entgegenhaltungen:
**US-A- 5 392 741    US-A- 5 566 745
US-A- 6 142 108    US-A1- 2009 277 429**

EP 2 675 687 B1

**Beschreibung**

Die Erfindung betrifft ein Verfahren zum Betreiben eines Schienenfahrzeugs, das einen Dieselmotor, einen Motorkühler und einen den Dieselmotor mit dem Motorkühler verbindenden Kühlkreislauf aufweist, in dem eine Kühlflüssigkeit umgewälzt wird, nach dem Oberbegriff des Patentanspruchs 1.

Ein derartiges Verfahren ist aus der Patentschrift US 5,392,741 bekannt.

An dieselelektrische Schienenfahrzeuge, insbesondere Diesellokomotiven, werden hinsichtlich der Umweltverträglichkeit immer höhere Anforderungen gestellt. Ähnlich wie im Straßenverkehr steht hierbei vor allem die Abgasemission im Vordergrund. Dies stellt die Hersteller von Dieselmotoren vor immer größere Herausforderungen. Das Einhalten vorgeschriebener Abgasgrenzwerte gelingt beispielsweise mit Hilfe einer Abgasrückführung, die jedoch für erheblich höhere Wärmemengen in dem Dieselmotor sorgt, die über das Kühlwasser von dem Dieselmotor an den Motorkühler übertragen und dort abgeführt werden müssen. Dadurch vergrößert sich zwangsweise auch die Größe und das Gewicht des Motorkühlers. Sowohl die Kühlergröße, vor allem aber das Kühlergewicht führt jedoch zu immer größeren Nachteilen und Problemen.

Grundsätzlich können größere Wärmemengen des Dieselmotors nur durch entsprechend größere und leistungsfähigere Motorkühler abgeführt werden. Ausschlaggebend für die Dimensionierung der Kühler ist neben der abzuführenden Wärme auch die jeweilige Umgebungstemperatur. Mathematisch lässt sich folgender Zusammenhang herstellen:

$$\dot{Q} = c\dot{m}\Delta\mathrm{T}\ ,$$

wobei $\dot{Q}$ gleich der abzuführenden Wärme pro Zeit, also letztendlich die vom Kühler an die Umgebung abzugebende Wärmeleistung, $c$ die spezifische Wärmekapazität der Umgebungsluft, $\dot{m}$ der Durchsatz an Luftmasse durch den Kühler pro Zeit und $\Delta T$ die Temperaturdifferenz zwischen Lufttemperatur am Eintritt und am Austritt des Motorkühlers sind. Die Lufttemperatur am Eintritt des Motorkühlers ist gleich der Umgebungstemperatur. Die Lufttemperatur am Austritt des Kühlers hängt stark von der Temperatur der Kühlflüssigkeit des Dieselmotorsystems ab. $\dot{Q}$ steigt, wie oben erwähnt, aufgrund immer schärferer Bestimmungen fortwährend an. Die spezifische Wärmekapazität $c$ ist eine Naturkonstante. Somit können nur die Größen $\dot{m}$ und $\Delta T$ eine steigende abzuführende Wärmeleistung ausgleichen. Eine Vergrößerung von $\dot{m}$ bedeutet jedoch größere Radiatoren und größere Lüfter. Es wird daher unter diesem mathematischen Ausdruck letztendlich nur eine größere Kühlanlage definiert. $\Delta T$ wird von der Kühlwassertemperatur des Dieselkühlersystems und der Umgebungstemperatur bestimmt. Je höher die Kühlwassertemperatur des Systems gewählt wird, desto größer wird $\Delta T$, wobei diesbezüglich von den Herstellern der Dieselmotoren Grenzen gesetzt sind. Je höher die Umgebungstemperatur wird, desto kleiner wird daher $\Delta T$. Die Umgebungstemperatur ist selbstverständlich nicht beeinflussbar. Jedoch muss bei der Auslegung der dieselelektrischen Lokomotive definiert sein, bis zu welcher Umgebungstemperatur die volle Dieselmotorleistung zur Verfügung steht.

Aufgrund der immer geringer werdenden Abgasgrenzwerte, tritt immer öfter der Problemfall auf, dass bei einer dieselelektrischen Lokomotive das Kühlsystem die entstehenden Wärmemengen des Dieselmotors nicht mehr abführen kann. Zur Lösung dieses Problems wird dann eine von der Außentemperatur sowie von der Kühlwassertemperatur abhängige selbsttätige Verringerung der Dieselmotorleistung eingeleitet. Dies könnte beispielsweise bei einem heißen Tag mit Außentemperaturen bis zu 35°C dazu führen, dass die dieselelektrische Lokomotive nicht mehr mit der vollen Dieselmotorleistung fahren kann, da die Kühlanlage die unter Volllast anfallenden Wärmemengen nur bis Außentemperaturen bis zu 32°C abführen kann. Solche von der Außenlufttemperatur abhängigen Verringerungen der Dieselmotorleistung sind jedoch dadurch begrenzt, dass die angelegten Fahrpläne eines Schienenverkehrsnetzes eingehalten werden müssen.

Aufgabe der Erfindung ist es daher, ein Verfahren der eingangs genannten Art bereitzustellen, mit dem dieselelektrische Schienenfahrzeuge auch bei hohen Außenlufttemperaturen möglichst lange auch unter Volllast betrieben werden können.

Die Erfindung löst diese Aufgabe durch ein Verfahren zum Betreiben eines Schienenfahrzeugs, das einen Dieselmotor, einen Motorkühler und einen den Dieselmotor mit dem Motorkühler verbindenden Kühlkreislauf aufweist, in dem eine Kühlflüssigkeit umgewälzt wird, bei dem eine Kühlflüssigkeitstemperatur der umgewälzten Kühlflüssigkeit und eine Außenlufttemperatur der atmosphärischen Außenluft erfasst werden, die Außenlufttemperatur mit einer zuvor festgelegten Außenluftgrenztemperatur verglichen wird, die Kühlleistung des Motorkühlers so eingestellt wird, dass die Kühlflüssigkeitstemperatur einer Normalbetriebstemperatur möglichst entspricht, wenn die Außenlufttemperatur kleiner ist als die Außenluftgrenztemperatur, und die Kühlleistung des Motorkühlers so eingestellt wird, dass die Kühlflüssigkeitstemperatur einer unteren Betriebstemperatur, die geringer ist als die Normalbetriebstemperatur, möglichst entspricht, wenn die Außenlufttemperatur größer ist als die Außenluftgrenztemperatur.

Erfindungsgemäß wird auf die Kühlflüssigkeitstemperaturregelung des Kühlkreislaufs abgestellt. Hierbei wird das Zusammenspiel zwischen Dieselmotor und Motorkühler berücksichtigt. Erfindungsgemäß wird die zwischen dem Dieselmotor und dem Motorkühler umgewälzte Kühlflüssigkeit des Kühlkreislaufs von der Regelung des Kühlkreislaufs so eingestellt, dass diese gegenüber der bei Normalbetrieb der herrschenden Temperatur unterkühlt wird. Das erfindungsgemäße Verfahren wird erst in Gang gesetzt, wenn die Außenlufttemperatur so hoch geworden ist, dass der Motorkühler die vom Dieselmotor erzeugte Wärme nicht mehr abgeführt werden kann, wenn dieser unter Volllast fährt. Dies tritt ab Temperaturen ein, die gleich groß oder größer sind als eine vorbekannte Außenluftgrenztemperatur. Wird bei dem fortwährend durchgeführten Temperaturvergleich festgestellt, dass die Außenlufttemperatur über die Außenluftgrenztemperatur ansteigt, wird die Kühlflüssigkeit und damit der gesamte Kühlkreislauf auf eine tiefere Temperatur abgekühlt. Diese tiefere Temperatur wird hier als untere Betriebstemperatur bezeichnet. Die untere Betriebstemperatur ist selbstverständlich geringer oder kleiner als die Normalbetriebstemperatur, also die Temperatur der Kühlflüssigkeit, die abgesehen von anfänglichen Über- und Unterregelungen im eingespielten oder eingeschwungenen Zustand des Systems in der Kühlflüssigkeit herrscht. Mit anderen Worten wird erfindungsgemäß Kühlflüssigkeit unterkühlt. Nach einer gewissen Zeit werden Motorblock und Radiatoren des gesamten Kühlsystems ebenfalls die untere Betriebstemperatur erreichen. Beschleunigt nun betriebsgemäß das Schienenfahrzeug mit Volllast den Zug, reicht aufgrund der hohen Außentemperatur die Kühlleistung nicht aus, um die Abwärmen des Dieselmotors vollständig abzuführen. Daher steigt die Temperatur der Kühlflüssigkeit über die untere Betriebstemperatur an. Eine elektronische Regelung erkennt das Überschreiten der unteren Betriebstemperatur und steuert den Motorkühler, beispielsweise einen Lüfter des Motorkühlers, voll aus. Aufgrund der hohen abzuführenden Wärme werden jedoch trotzdem Kühlflüssigkeit, Motorblock und Radiatoren immer wärmer. Beim Erreichen einer oberen Abschalttemperatur wird schließlich die Dieselmotorleistung reduziert. Erfindungsgemäß kann jedoch der Dieselmotor länger unter Volllast betrieben werden, weil die Kühlflüssigkeit, der Motorblock und die Radiatoren, also der gesamte Kühlkreislauf, mit der überschüssigen Wärme erst bis zur Abschalttemperatur gebracht werden musste. Während der Erwärmungsphase der Kühlflüssigkeit von der unteren Betriebstemperatur bis zu der besagten Abschalttemperatur konnte der Dieselmotor mit Volllast laufen. Im Idealfall erlangt das Schienenfahrzeug seine Endgeschwindigkeit bevor die Abschalttemperatur erreicht wird. Dies bedeutet, dass der Zug mit Volllast bis zur Endgeschwindigkeit beschleunigt wird, obwohl die Kühlanlage nicht für die abzuführenden Wärmemengen ausgelegt ist. Bei der anschließenden Konstantfahrt des Zuges unter Teillast und einer geringeren abzuführenden Wärme wird der Motorkühler so angesteuert, dass die Temperatur der Kühlflüssigkeit im Kühlkreislauf wieder die untere Betriebstemperatur erreicht. Erfindungsgemäß kann die nächste Volllastfahrt somit hinsichtlich der abzuführenden Wärmemenge bis zu einem gewissen Grad abgepuffert werden.

Die oben genannten Verfahrensschritte sind zweckmäßigerweise in einen Regelalgorithmus der Fahrzeugregelung einschließlich der Motoransteuerung und der Kühlersteuerung integriert.

Zweckmäßigerweise wird erfindungsgemäß erfasst, ob der Dieselmotor unter Volllast oder Teillast betrieben wird. Das erfindungsgemäße Verfahren wird bei einer zweckmäßigen Ausgestaltung nur bei Teillast in Gang gesetzt.

Zweckmäßigerweise wird der Leistungsverbrauch ausgewählter elektrischer Verbraucher des Schienenfahrzeugs verringert, wenn die Außenlufttemperatur die Außenluftgrenztemperatur überschreitet und der Zug mit Volllast beschleunigt. Der Dieselmotor stellt die Leistungsversorgung des gesamten Zuges bereit. Der Leistungsverbrauch zusätzlicher Baugruppen reduziert daher den Leistungsanteil, der für die Traktion des Zuges zur Verfügung steht. Wie bereits weiter oben ausführlich beschrieben wurde, tritt vor allem bei hohen Umgebungslufttemperaturen die Schwierigkeit auf, dass die unter Volllast abzuführende Wärmemenge des Dieselmotors nicht mehr schnell genug abgeführt werden kann. Bei solchen hohen Temperaturen nimmt auch der Leistungsverbrauch der so genannten Hilfsbetriebe vor allem durch die bei hohen Temperaturen erforderliche Klimatisierung des Zuges zu. Durch die kurzzeitige Abschaltung der Klimaanlage als elektrischer Verbraucher während der Beschleunigung des Zuges kann somit der Leistungsverbrauch der ausgewählten elektronischen Verbraucher verringert werden, so dass sich die Traktionsleistung erhöht. Das Schienenfahrzeug erreicht daher schneller die gewünschte Geschwindigkeit mit kürzeren Volllastfahrten im Gefolge.

Zweckmäßigerweise erfolgt die Verringerung des Leistungsverbrauchs durch vollständiges Abschalten der besagten elektronischen Verbraucher über einen Abschaltzeitraum hinweg. Mit anderen Worten wird beispielsweise bei hohen Temperaturen die Klimaanlage nach Ablauf des Abschaltzeitraums wieder eingeschaltet. Der Abschaltzeitraum ist zweckmäßigerweise so kurz bemessen, dass sich für die Passagiere des Schienenfahrzeugs kein Komfortverlust einstellt.

Zweckmäßigerweise wird eine Belastung des Dieselmotors unter Gewinnung einer maximalen Belastung erfasst, wobei der als Abschaltzeitraum die Zeitdauer der maximalen Belastung des Dieselmotors gewählt wird. Mit anderen Worten wird beispielsweise bei einer Beschleunigung des Schienenfahrzeugs, bei welcher der Dieselmotor unter Volllast betrieben wird, die Klimaanlage und/oder ein sonstiger elektrischer Verbraucher abgestellt. Anschließend kommt es nach einem kurzzeitigen Unterbrechen oder Reduzieren der Leistung der Klimaversorgung wieder zum Normalbetrieb.

Zweckmäßigerweise wird die Fahrzeugposition des Schienenfahrzeugs beim Fahren auf einer Schienenstrecke erfasst, wobei das Abschalten unter Berücksichtigung des besagten Fahrzeugposition, wie unter Berücksichtigung von Streckendaten erfolgt, aus denen Anstiege und Gefälle der Schienenstrecke abgeleitet werden können. Gemäß dieser vorteilhaften Weiterentwicklung kann beispielsweise die Zeitdauer berechnet werden, unter der das Schienenfahrzeug unter Volllast fährt. Weiterhin kann die Zeitdauer berücksichtigt werden, bis zu der ein Abschalten, beispielsweise der Klimaanlage, möglich ist, ohne dass es zu einem Komfortverlust für die Passagiere kommt. Der Abschaltzeitraum wird dann in diesem Fall so gewählt, dass der Komfortverlust gerade nicht eintritt. Sollte eine weitere Fahrt unter Volllast nicht mehr möglich sein, wird die Beschleunigung des Schienenfahrzeugs entsprechend reduziert.

Zweckmäßigerweise wird die Fahrt des Schienenfahrzeugs in einem Fahrplan festgelegt, wobei Abweichungen von dem besagten Fahrplan über Kommunikationsleitungen ermittelt werden und das Abschalten von Verbrauchern unter Berücksichtigung der erfassten Abweichungen erfolgt.

Gemäß einer weiteren zweckmäßigen Ausgestaltung der Erfindung wird die Innentemperatur im Inneren des Schienenfahrzeugs und/oder im Innenraum wenigstens eines Wagens des Schienenfahrzeugs erfasst, wobei das Abschalten in Abhängigkeit der erfassten Innentemperatur erfolgt.

Erfindungsgemäß ist ein flexibles Konstrukt bereitzustellen, mit dem das Abschalten elektrischer Verbraucher unter Beibehaltung des Passagierkomforts durchgeführt werden kann.

Durch die oben beschriebenen Verfahren und Verfahrensschritte kann auch an heißen Tagen ein Schienenfahrzeug temporär unter Volllast gefahren werden, obwohl die Kapazität seiner Kühlanlage überschritten wird. Hierzu müssen die Komponenten der Schienenfahrzeuge nicht grundlegend geändert werden. Fahrpläne können aufgrund kurzzeitiger Volllastfahrten trotz der hohen Außentemperaturen eingehalten werden können. Des Weiteren können sich erfindungsgemäß Vorteile ergeben, wenn beispielsweise Verspätungen aufzuholen sind. Die erfindungsgemäßen Maßnahmen werden zweckmäßigerweise nur dann eingeleitet, wenn hierzu auch Notwendigkeit besteht. Dies bedeutet, dass erst dann in den Normalbetrieb des Schienenfahrzeugs eingegriffen wird, wenn die Außenlufttemperatur eine Außenluftgrenztemperatur überschreitet. Entsprechendes gilt im umgekehrten Fall, nämlich dass die erfindungsgemäßen Maßnahmen dann ausgesetzt werden, wenn die Außenlufttemperaturen unter die Außenluftgrenztemperatur absinkt. Das Schienenfahrzeug fährt dann wieder im Normalbetrieb. Entsprechendes gilt für das kurzzeitige Abschalten der Stromversorgung elektrischer Verbraucher. Des Weiteren können weitere Zuginformationen in die Entscheidung einfließen, ob ausgewählte elektrische Verbraucher abgeschaltet werden. Fährt der Zug planmäßig, besteht nicht unbedingt die Notwendigkeit solche Maßnahmen einzuleiten. Hat der Zug jedoch an einem heißen Tag an vielen Haltestellen Verspätung, kann diese über die in der Erfindung beschriebenen Maßnahmen verringert werden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei

Figur 1     ein Diagramm verdeutlicht, das schematisch die Temperatur des Kühlwasser einmal mit und einmal ohne Kühlervorkühlung in Abhängigkeit der Zeit schematisch verdeutlicht und

Figur 2     die Leistung des Dieselmotors in Abhängigkeit der Zeit für unterschiedliche Verfahren verdeutlicht.

Wie bereits ausgeführt wurde, stellt die Erfindung auf eine Vorkühlung des Kühlkreislaufs eines Dieselmotors ab. Ein Ausführungsbeispiel des erfindungsgemäßen Verfahrens wird im Folgenden bei einem Schienenfahrzeug angewandt, das einen Dieselmotor und einen Motorkühler aufweist. Der Dieselmotor und der Motorkühler sind über einen Kühlkreislauf miteinander verbunden. In dem Kühlkreislauf wird durch eine Umwälzpumpe eine Kühlflüssigkeit, hier Wasser, umgewälzt. Die Prozesszustände des genannten Systems in Abhängigkeit der Kühlmitteltemperatur sind in der nachfolgenden Tabelle 1 verdeutlicht.

Tabelle 1

| Kühlmitteltemperatur in °C | Prozesszustand |
| --- | --- |
| -20 bis 0 | Stillstand Dieselmotor - Vorwärmung |
| 0 bis +20 | Dieselmotorstart - Dieselmotorbetrieb nur mit Leerlauf möglich |
| +20 bis +60 | Dieselmotor kann mit Teillast betrieben werden |
| +60 | Dieselmotor kann mit Volilast betrieben werden |
| +75 | Theromostat Offnungsbeginn (Thermostat regelt mechanisch Kühlwasserzulauf zum Kühler) |
| +85 | Lüfter - Vorsteuerbeginn nach spezieller Kurve |
| +88 | Thermostat Vollständig geöffnet (Thermostat regelt mechanisch Kühlwasserzulauf zum Kühler) |

4

(fortgesetzt)

| Kühlmitteltemperatur in °C | Prozesszustand |
|---|---|
| +93 | Betriebstemperatur Kühlwasser (Referenzpunkt elektronischer Regler) |
| +97 | Gelb-Alarm - Reduzierung der Dieselmotorleistung |
| +99 | Rot-Alarm - Notausschaltung Dieselmotor |

Die oben gezeigte Tabelle ist beispielhaft zu sehen. Andere Dieselmotoren und andere Kühlkreisläufe können andere Grenztemperaturen aufweisen. Bei Normalfahrt wird die Kühlflüssigkeit auf einer bestimmten Normalbetriebstemperatur gehalten. Hierzu dient eine Kühlerregelung. Die Kühlerregelung ist mit einem Kühlflüssigkeitssensor verbunden, welcher die Temperatur der Kühlflüssigkeit erfasst. Darüber hinaus ist die Kühlerregelung mit einem Temperatursensor zum Erfassen der Außenlufttemperatur verbunden.

In dem beispielhaft gezeigten Kühlkreislauf gemäß Tabelle 1 ist die Normalbetriebstemperatur 93°C. Mit anderen Worten wird die Kühlleistung des Motorkühlers durch eine Kühlerregelung so geregelt, dass sich eine Kühlwassertemperatur von 93°C einstellt. Wird die abzuführende Wärmeleistung größer als die Wärmeleistung, welche der Motorkühler abführen kann, wird schnell eine obere Abschalttemperatur von 97°C erreicht und eine Gelb-Alarm-Warnung ausgegeben. Erhält die Fahrzeugsteuerung eine Gelb-Alarm-Warnung, reduziert diese die Dieselmotorleistung, so dass sich keine Überhitzung einstellen kann. Das Fahrprofil von Diesellokomotiven ist abgesehen von Bergfahrten dadurch gekennzeichnet, dass ein Zug relativ kurzzeitig mit Volllast auf Geschwindigkeiten gebracht wird und anschließend nur mit Teillast auf Geschwindigkeit gehalten wird. Wie aus der oben stehenden Tabelle ersichtlich ist, kann der Dieselmotor bereits bei 60°C unter Volllast betrieben werden. Dies bedeutet, dass bei dieser Temperatur der Dieselmotor voll einsatzfähig ist.

Überschreitet die Außenlufttemperatur eine zuvor vorgegebene Außenluftgrenztemperatur, ab welcher der Motorkühler nicht mehr in der Lage ist, die bei Volllast erzeugte Wärme des Dieselmotors abzuführen, wird das erfindungsgemäße Verfahren in Gang gesetzt.

In dem gezeigten Ausführungsbeispiel wird daher bei Teillast die Temperatur der im Kühlkreislauf umlaufenden Kühlflüssigkeit auf 60°C gehalten. Nach einer Zeit erreicht nicht nur die Kühlflüssigkeit, sondern auch der gesamte Motorblock die Radiatoren und sonstige Bauteile des Kühlkreislaufs diese Temperatur. Der gesamte Kühlkreislauf wirkt daher wie ein Kältespeicher. Wird das Schienenfahrzeug beschleunigt, fährt der Dieselmotor unter Volllast. Aufgrund der hohen Außentemperatur reicht die Kühlleistung der Motorkühlung nicht mehr aus, um die Abwärmen des Dieselmotors abzuführen. Dadurch steigt die Kühlflüssigkeitstemperatur über die untere Betriebstemperatur. Eine elektronische Regelung erkennt das Überschreiten der unteren Betriebstemperatur und steuert den Kühllüfter des Motorkühlers voll aus. Aufgrund der hohen abzuführenden Wärme werden die Kühlflüssigkeit, der Motorblock und die Radiatoren, also der gesamte Kühlkreislauf, immer wärmer. Erst beim Erreichen der Abschalttemperatur wird die Dieselmotorleistung reduziert. Erfindungsgemäß konnte jedoch der Dieselmotor länger unter Volllast betrieben werden, weil die Kühlflüssigkeit, der Motorblock und die sonstigen Bauteile der Motorkühlung zuerst mit überschüssiger Wärme auf die Abschalttemperatur, in diesem Fall 97°C gebracht werden müssen. Während dieser Zeitdauer konnte der Dieselmotor mit Volllast laufen.

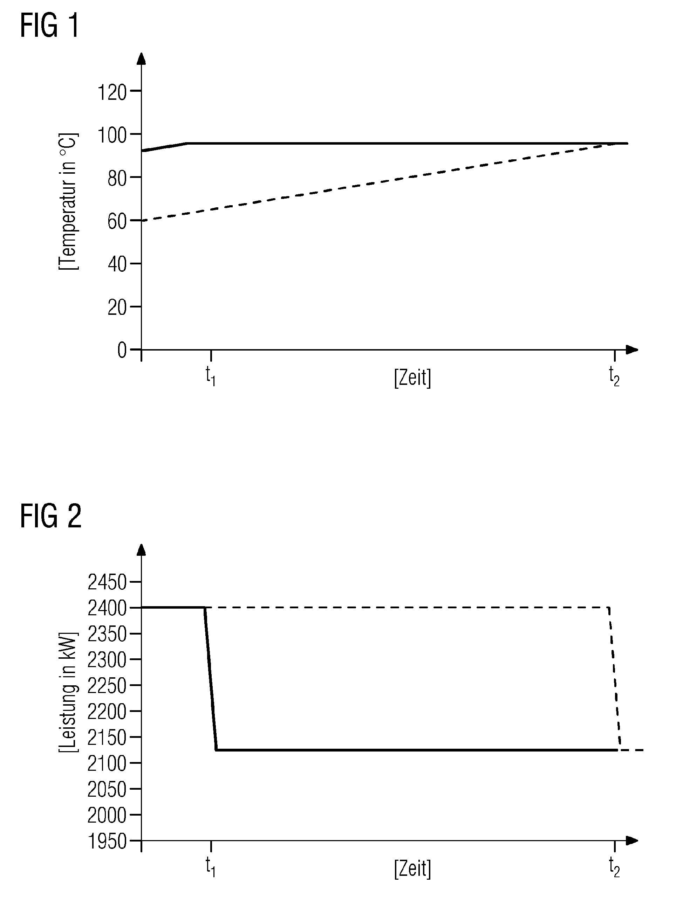

Dies wird in Figur 1 verdeutlicht. Mit der durchgezogenen Linie wird das Verhalten bei Normalbetrieb ohne das erfindungsgemäße Verfahren verdeutlicht. Es ist erkennbar, dass bei Normalbetrieb die Temperatur des Kühlkreislaufs zunächst bei 93°C liegt. Des Weiteren wird davon ausgegangen, dass die Außenlufttemperatur größer ist als die Außenluftgrenztemperatur. Dabei fährt das Schienenfahrzeug fortwährend unter Volllast. Die Wärme des Dieselmotors kann von dem Motorkühler dann nicht mehr abgeführt werden. Relativ schnell im Zeitpunkt t1 werden die 97°C Abschalttemperaturen erreicht, bei der es zu einem Gelb-Alarm und somit zu einer Reduktion der Dieselmotorleistung kommt. Der Temperatur der Kühlflüssigkeit bei Einschaltung eines Ausführungsbeispiels des erfindungsgemäßen Verfahrens ist in der gestrichelten Linie dargestellt. Es ist erkennbar, dass die Temperatur der Kühlflüssigkeit auf 60°C als untere Betriebstemperatur gebracht wurde. Erst allmählich kommt es zu einem Anstieg der Temperatur der Kühlflüssigkeit, so dass eine wesentlich längere Zeitdauer vergangen ist, bis das Kühlwasser im Zeitpunkt t2 die 97°C erreicht. Im Idealfall ist die Beschleunigungsfahrt vor Erreichen der 97°C abgeschlossen, so dass die Motorkühlleistung wieder ausreichend ist, die Temperatur der Kühlflüssigkeit wieder auf 60°C abzukühlen.

Figur 2 zeigt die entsprechende Ansteuerung des Dieselmotors einmal ohne das erfindungsgemäße Verfahren mit Hilfe der durchgezogenen Linie und einmal die Ansteuerung unter Zuhilfenahme des erfindungsgemäßen Verfahrens mit Hilfe der gestrichelten Linie. Es ist erkennbar, dass bei einem normalen Ansteuerungsverfahren ohne die Erfindung bereits zum Zeitpunkt t1 die Leistung des Dieselmotors unter Volllast von 2400 MW auf 2125 MW reduziert werden muss. Erfindungsgemäß ist die Reduzierung erst bei Zeitpunkt t2 erforderlich.

Die zwischen t1 und t2 liegende Zeitspanne ist die Zeit, mit der der Dieselmotor länger unter Volllast betrieben werden kann.

Das erfindungsgemäße Verfahren ist einfach in bereits bestehende Schienenfahrzeuge integrierbar. Das erfindungsgemäße Verfahren ist somit sehr kostengünstig.

**Patentansprüche**

1. Verfahren zum Betreiben eines Schienenfahrzeugs, das einen Dieselmotor, einen Motorkühler und einen den Dieselmotor mit dem Motorkühler verbindenden Kühlkreislauf aufweist, in dem eine Kühlflüssigkeit umgewälzt wird, bei dem

   - eine Kühlflüssigkeitstemperatur der umgewälzten Kühlflüssigkeit und eine Außenlufttemperatur der atmosphärischen Außenluft erfasst werden,
   - die Außenlufttemperatur mit einer zuvor festgelegten Außenluftgrenztemperatur verglichen wird,
   - die Kühlleistung des Motorkühlers so eingestellt wird, dass die Kühlflüssigkeitstemperatur einer Normalbetriebstemperatur möglichst entspricht, wenn die Außenlufttemperatur kleiner ist als die Außenluftgrenztemperatur,

   **dadurch gekennzeichnet, das**

   - die Kühlleistung des Motorkühlers so eingestellt wird, dass die Kühlflüssigkeitstemperatur einer unteren Betriebstemperatur, die geringer ist als die Normalbetriebstemperatur, möglichst entspricht, wenn die Außenlufttemperatur größer ist als die Außenluftgrenztemperatur.

2. Verfahren nach Anspruch 1,
   **dadurch gekennzeichnet, dass**
   der Leistungsverbrauch ausgewählter elektrischer Verbraucher des Schienenfahrzeugs verringert wird, wenn die Außenlufttemperatur die Außenluftgrenztemperatur überschreitet.

3. Verfahren nach Anspruch 2,
   **dadurch gekennzeichnet, dass**
   die Verringerung des Leistungsverbrauchs durch vollständiges Abschalten der elektrischen Verbraucher über einen Abschaltzeitraum hinweg erfolgt.

4. Verfahren nach Anspruch 3,
   **dadurch gekennzeichnet, dass**
   eine Belastung des Dieselmotors unter Gewinnung einer maximalen Belastung erfasst wird, wobei als Abschaltzeitraum die Zeitdauer der maximalen Belastung des Dieselmotors gewählt wird.

5. Verfahren nach einem der Ansprüche 2 bis 4,
   **dadurch gekennzeichnet, dass**
   die Fahrzeugposition des Schienenfahrzeugs beim Fahren auf einer Schienenstrecke erfasst wird und das Abschalten unter Berücksichtigung der Fahrzeugposition sowie von Streckendaten erfolgt, aus denen Anstiege und Gefälle der Schienenstrecke abgeleitet werden können.

6. Verfahren nach einem der Ansprüche 2 bis 5,
   **dadurch gekennzeichnet, dass**
   die Fahrten des Schienenfahrzeugs sowie die Fahrten weiterer Schienenfahrzeuge in einem Fahrplan festgelegt werden, wobei Abweichungen von dem Fahrplan über Kommunikationsleitungen ermittelt werden und das Abschalten unter Berücksichtigung der erfassten Abweichungen erfolgt.

7. Verfahren nach einem der Ansprüche 2 bis 6,
   **dadurch gekennzeichnet, dass**
   die Innentemperatur im Inneren des Schienenfahrzeugs und/oder im Innenraum wenigstens eines Wagens des Schienenfahrzeugs erfasst wird, wobei das Abschalten in Abhängigkeit der erfassten Innentemperatur(en) erfolgt.

**Claims**

1. Method for operating a rail vehicle, which has a diesel engine, an engine radiator and a cooling circuit that connects the diesel engine to the engine radiator, a cooling liquid being circulated in the cooling circuit, wherein

   - a cooling liquid temperature of the circulated cooling liquid and an outer air temperature of the atmospheric outer air are detected,
   - the outer air temperature is compared with a previously defined outer air limit temperature,
   - the cooling power of the engine radiator is set in such a way that the cooling liquid temperature corresponds as closely as possible to a normal operating temperature if the outer air temperature is less than the outer air limit temperature,

   **characterised in that**

   - the cooling power of the engine radiator is set in such a way that the cooling liquid temperature corresponds as closely as possible to a lower operating temperature, which is lower than the normal operating temperature if the outer air temperature is greater than the outer air limit temperature.

2. Method according to claim 1,
   **characterised in that**
   the power consumption of selected electrical consumers of the rail vehicle is reduced if the outer air temperature exceeds the outer air limit temperature.

3. Method according to claim 2,
   **characterised in that**
   the reduction of the power consumption takes place by the complete switch-off of the electrical consumers over a switch-off period.

4. Method according to claim 3,
   **characterised in that**
   a load of the diesel engine is detected by obtaining a maximum load, wherein the duration of the maximum load of the diesel engine is selected as the switch-off time.

5. Method according to one of claims 2 to 4,
   **characterised in that**
   the vehicle position of the rail vehicle when travelling on a stretch of rail is detected and the switch-off is performed taking into account the vehicle position and rail data from which ascents and descents of the stretch of rail can be derived.

6. Method according to one of claims 2 to 5,
   **characterised in that**
   the journeys of the rail vehicle and the journeys of further rail vehicles are defined in a timetable, wherein deviations from the timetable are determined via communication lines and the switch-off is performed taking into account the deviations detected.

7. Method according to one of claims 2 to 6,
   **characterised in that**
   the internal temperature in the interior of the rail vehicle and/or in the interior space of at least one carriage of the rail vehicle is detected, wherein the switch-off is performed as a function of the detected internal temperature(s).

**Revendications**

1. Procédé pour faire fonctionner un véhicule sur rails, qui a un moteur diesel, un refroidisseur du moteur et un circuit de refroidissement mettant le moteur diesel en communication avec le refroidisseur du moteur, circuit dans lequel un liquide de refroidissement est recirculé, dans lequel

   - on relève une température du liquide de refroidissement recirculé et une température de l'air extérieur atmosphérique,

- on compare la température de l'air extérieur à une température limite d'air extérieur fixée auparavant,
- on règle la puissance de refroidissement du refroidisseur du moteur, de manière à ce que la température du liquide de refroidissement corresponde le plus possible à une température de fonctionnement normale, lorsque la température de l'air extérieur est inférieure à la température limite de l'air extérieur,

**caractérisé en ce que**

- on règle la puissance de refroidissement du refroidisseur du moteur, de manière à ce que la température du liquide de refroidissement corresponde le plus possible à une température de fonctionnement basse, qui est plus basse que la température de fonctionnement normale, si la température de l'air extérieur est plus haute que la température limite de l'air extérieur.

**2.** Procédé suivant la revendication 1,
**caractérisé en ce que** l'on diminue la consommation de puissance du consommateur électrique sélectionné du véhicule sur rails si la température de l'air extérieur dépasse la température limite de l'air extérieur.

**3.** Procédé suivant la revendication 2,
**caractérisé en ce que** l'on effectue la diminution de la consommation de puissance en déconnectant complètement le consommateur électrique pendant un laps de temps de déconnexion.

**4.** Procédé suivant la revendication 3,
**caractérisé en ce que** l'on relève une charge du moteur diesel en obtenant une charge maximum, dans lequel on choisit, comme laps de temps de déconnexion, la durée de la charge maximum du moteur diesel.

**5.** Procédé suivant l'une des revendications 2 à 4,
**caractérisé en ce que** l'on détecte la position du véhicule sur rails lorsqu'il passe sur une voie ferroviaire et on effectue la déconnexion en tenant compte de la position du véhicule ainsi que de données de la voie, à partir desquelles on peut déduire des montées et des descentes de la voie ferroviaire.

**6.** Procédé suivant l'une des revendications 2 à 5,
**caractérisé en ce que** l'on fixe des circulations du véhicule sur rails ainsi que les circulations d'autres véhicules sur rails dans un plan de circulation, des écarts au plan de circulation étant déterminés par des lignes de communication et la déconnexion s'effectuant en tenant compte des écarts détectés.

**7.** Procédé suivant l'une des revendications 2 à 6,
**caractérisé en ce que** l'on relève la température intérieure à l'intérieur du véhicule sur rails et/ou à l'intérieur d'au moins une voiture du véhicule sur rails, la déconnexion s'effectuant en fonction de la température intérieure relevée ou des températures intérieures relevées.

FIG 1

FIG 2

**IN DER BESCHREIBUNG AUFGEFÜHRTE DOKUMENTE**

**In der Beschreibung aufgeführte Patentdokumente**

- US 5392741 A